# FASCICULE DE BREVET EUROPEEN

(11) **EP 1 475 528 B1**
(45) Date de publication et mention de la délivrance du brevet: **25.06.2008**
(21) Numéro de dépôt: 04291175.0
(22) Date de dépôt: 06.05.2004
(51) Int. Cl.: F02D 41/40

(54) **Dispositif et procédé de contrôle d'injection de carburant pour moteur thermique**
Einrichtung und Methode zur Steuerung der Kraftstoffeinspritzung für einen Verbrennungsmotor
System and method to control fuel injection for an combustion engine

(30) Priorité: 06.05.2003 FR 0305502
(43) Date de publication de la demande: 10.11.2004
(73) Titulaire: RENAULT S.A.S., 92100 Boulogne Billancourt (FR)
(72) Inventeur: Airaud, Séverine, 78000 Versailles (FR); Piard, Christophe, 91620 La Ville Du Bois (FR); Rollet, Bernard, 91220 Le Plessis Pate (FR)

(56) Documents cités:
- EP-A- 0 878 617
- DE-A- 19 712 143
- DE-A- 19 908 678

## Description

La présente invention concerne, de façon générale le domaine de l'injection de carburant dans un moteur thermique tel qu'un moteur diesel et plus particulièrement un dispositif et un procédé d'injection permettant de réduire la pollution émise par de tels moteurs.

Plus particulièrement, l'invention concerne selon un premier aspect, un dispositif de contrôle d'injection de carburant dans au moins une chambre de combustion d'un moteur thermique,
le dispositif comportant un circuit haute pression doté d'une pompe haute pression, d'un injecteur piloté, la pompe haute pression alimentant en carburant haute pression ledit injecteur, l'injecteur injectant au cours d'un cycle moteur, sur commande d'un signal provenant d'un moyen de pilotage de l'injection, du carburant dans la chambre de combustion selon une première injection et au moins une seconde injection postérieure à la première.

L'invention concerne également, selon un second aspect, un procédé de contrôle d'injection de carburant dans au moins une chambre de combustion d'un moteur thermique, comportant une première injection de carburant dans la chambre par l'intermédiaire d'un circuit de carburant haute pression et au moins une seconde injection de carburant postérieure à la première, ces deux injections se déroulant au cours d'un même cycle moteur.

Il est à noter que le terme première injection, utilisé dans ce document, doit être compris comme désignant n'importe laquelle des injections de carburant effectuée dans un même cycle moteur, dans la mesure où cette injection est suivie d'une seconde injection. Préférentiellement, mais non exclusivement, cette première injection est l'injection principale, c'est à dire l'injection du cycle au cours de laquelle est injectée la plus grande quantité de carburant.

Le terme seconde injection, doit être compris comme étant une injection effectuée postérieurement à la première injection, et au cours du même cycle moteur. Préférentiellement, mais non exclusivement, cette seconde injection est immédiatement successive de la première injection, mais elle peut également être l'une des injections non immédiatement successives de la première injection.

Pour atteindre des niveaux polluants compatibles avec les normes de pollution, on utilise sur des moteurs thermiques des systèmes d'injection permettant d'appliquer plusieurs injections par cycle. La réduction des fumées peut être assurée par l'adjonction d'une seconde injection (mentionnée ci-dessus) qui peut être une injection communément appelée « after » et placée immédiatement après une première injection.

C'est une des raisons pour lesquelles de nombreux motoristes ont développé diverses solutions visant à contrôler plusieurs injections de carburant au cours d'un même cycle moteur.
Un dispositif et un procédé de contrôle d'injection de carburant des types précédemment définis, permettant de réduire partiellement le niveau d'émission de gaz et particules polluants par l'utilisation d'une seconde injection, est par exemple décrit dans le document brevet EP 1 035 314 de C.R.F. Societa Consortile per Azioni ou le document brevet EP 0 878617.

Ce document décrit un moteur thermique comportant plusieurs chambres de combustions ayant chacune un injecteur de carburant relié à un circuit de carburant haute pression. Des capteurs de position sont disposés sur l'arbre à cames du moteur, de manière à informer un moyen de pilotage de l'injection de la position de l'arbre à cames et de l'avancement du cycle moteur.
En fonction des informations issues des capteurs de position, le moyen de pilotage de l'injection émet des signaux de commande des différents injecteurs de manière à autoriser les première et seconde injections de carburant dans les chambres de combustion.

Ce dispositif de l'art antérieur permet de réduire en partie la pollution émise par le moteur. Toutefois le niveau de polluants émis reste souvent trop élevé, et il est de plus important de le réduire au maximum.

Dans ce contexte, la présente invention a pour but de proposer un dispositif et un procédé de contrôle d'injection de carburant pour moteur thermique permettant de réduire le volume d'émissions polluantes par rapport au moteur thermique de l'art antérieur.

A cette fin, le dispositif de contrôle d'injection de carburant dans une chambre de combustion d'un moteur thermique selon l'invention, par ailleurs conforme à la définition générique qu'en donne le préambule ci-dessus, est essentiellement caractérisé en ce qu'il comporte en outre un moyen d'évaluation de la pression du carburant dans le circuit haute pression, ce moyen d'évaluation étant relié au moyen de pilotage, et en ce que le moyen de pilotage est conçu pour déclencher la seconde injection lorsque la pression du carburant évaluée par le moyen d'évaluation atteint un pic consécutif à la première injection.

En effet, il a été constaté qu'après la première injection de carburant se produit un phénomène dit de « coup de bélier » aussi appelé onde de pression au niveau du circuit haute pression. Ce phénomène d'augmentation importante de la pression du carburant dans le circuit haute pression se produit à chaque changement de régime brutal et plus particulièrement à chaque fin d'injection, lorsque le flux de carburant transitant dans le circuit est brutalement interrompu ou réduit. Ce phénomène de « coup de bélier » est généralement perturbateur des procédés d'injections et les motoristes cherchent généralement à minimiser les perturbations engendrées. La présente invention utilise au contraire ce phénomène afin de faciliter l'injection de la seconde injection de carburant.

L'onde de pression du carburant dans le circuit haute pression, générée par la première injection excitatrice, passe en effet par au moins un pic haut de pression et éventuellement par plusieurs pics de pression consécutifs à la première injection. L'effet de la seconde injection est optimisé en la déclenchant, au moment où la pression du carburant dans le circuit atteint un pic haut. Le phasage de la seconde injection par rapport à la première se fait en mesurant l'évolution de la pression du circuit hydraulique haute pression à l'aide d'un capteur de pression branché sur un moyen de pilotage de l'injection.

Le phasage de la seconde injection au moment d'un des pics de pression consécutif de la première injection, ou à un instant proche de ce pic, légèrement avant ou légèrement après le pic, permet de profiter au mieux du surcroît de pression dans le circuit haute pression par rapport à la pression moyenne de régulation du circuit.

Ainsi la pulvérisation du carburant dans la chambre de combustion est améliorée, et la quantité de carburant injectée pour un temps d'activation de l'injecteur donné est augmentée.

Ce phasage particulier permet d'optimiser la seconde injection et corrélativement réduire le niveau des émissions polluantes par rapport à un moteur dont la seconde injection n'est pas déclenchée au moment du pic de pression.

Ainsi, le gain en émissions polluantes peut être transformé en gain de bruit, si on diminue la pression d'injection nominale pour se retrouver à un même niveau d'émissions de départ.

Afin de répondre aux objets précédemment décrits, il est également proposé un procédé de contrôle d'injection de carburant dans une chambre de combustion d'un moteur thermique selon l'invention, par ailleurs conforme à la définition générique qu'en donne le préambule ci-dessus. Ce procédé est essentiellement caractérisé en ce qu'il comporte en outre des étapes consistant à évaluer la pression de carburant à l'intérieur du circuit haute pression et à déclencher la seconde injection lorsque la pression évaluée du carburant atteint un pic de pression consécutif à la première injection.

Il a été constaté que le dispositif et le procédé de contrôle d'injection selon l'invention sont particulièrement adaptés pour fonctionner sur des moteurs de type diesel.

On peut par exemple améliorer le dispositif et le procédé selon l'invention en utilisant un capteur de pression comme moyen d'évaluation de la pression du carburant. Ce moyen d'évaluation de la pression peut être par exemple être implanté sur un ou tous les injecteurs, au niveau par exemple du ou des tubes d'alimentation en carburant du ou des injecteurs.
Ce moyen d'évaluation de la pression par capteur est avantageux car facile à mettre en place et permet une mesure directe de la pression par le moyen de pilotage, ce qui réduit le risque d'erreurs lors de l'évaluation de la pression.

Dans certains cas, l'utilisation d'une mesure indirecte de la pression peut être préférable à une mesure directe par capteur(s) de pression(s). Par exemple, il est parfois difficile de mettre en place une mesure directe de la pression du carburant par capteur de pression. Les capteurs étant soumis à des conditions d'utilisation extrêmes, il est parfois préféré, pour des raisons de longévité du moteur et de réduction des tâches de maintenance du moteur, d'utiliser des moyens d'évaluation indirecte de la pression du carburant.

Un moyen d'évaluation indirecte de la pression du carburant dans le circuit d'injection peut être un moyen cartographique fonctionnant sur un processeur associé à une mémoire et à des capteurs d'états du moteur.

La base de donnée cartographique est enregistrée sur une mémoire et donne la relation existant entre l'état instantané du moteur et la pression instantanée du carburant dans le circuit d'injection haute pression. Cette relation résultant d'essais du moteur réalisés préalablement puis enregistrés dans la base de données. Un processeur associé à des capteurs d'état du moteur, lit l'état du moteur et interroge la base de données cartographique afin de connaître la pression évaluée du carburant. Cette valeur de pression pré-enregistrée correspond à l'état du moteur mesuré par les capteurs d'états et est alors considérée pour déterminer le moment du pic haut de pression dans le circuit haute pression.

Ainsi les capteurs d'états peuvent être des capteurs de vitesses du moteur, des capteurs de température du carburant injecté, des capteurs de pression de la chambre de combustion, des capteurs de température de la chambre de combustion, des capteurs de flux de carburant, des capteurs de degrés d'ouverture, ou de temps d'ouverture de l'injecteur. Ces capteurs sont reliés au moyen de pilotage de l'injection et indiquent un état instantané du moteur.

Le moyen de pilotage de l'injection utilise les données de la pression carburant issues de la base de données cartographique et correspondant à l'état du moteur mesuré pour déclencher la seconde injection au moment d'un pic de pression consécutif à la première injection.

Un autre moyen d'évaluer la pression du carburant dans le circuit d'injection peut être par un logiciel de calcul de pression fonctionnant sur un processeur et utilisant une stratégie de modélisation physique de phénomènes d'ondes de pression à l'intérieur du circuit haute pression. Ce logiciel collecte des informations provenant de capteurs d'états du moteur et évalue par calcul, en fonction de la stratégie de modélisation et des états moteur mesurés, la valeur de la pression du carburant associée l'état du moteur mesuré. Cette valeur évaluée est alors transmise au moyen de pilotage. Les capteurs d'états sont du type précédemment défini. Les états mesurés pouvant être, par exemple, la pression moyenne d'injection, la température du carburant, la vitesse du moteur. La stratégie de modélisation pouvant prendre en compte des caractéristiques physiques et/ou géométriques du moteur et de son circuit d'injection afin de calculer soit la pression instantanée du carburant soit le moment du pic de pression du carburant à l'intérieur du circuit haute pression.

Le moyen de pilotage ayant collecté les données concernant la variation de la pression de carburant détermine alors le phasage idéal de la seconde injection en fonction de la position du pic de pression, puis sur commande d'un signal qu'il transmet à l'injecteur, commande la seconde injection de carburant.

D'autres caractéristiques et avantages de l'invention ressortiront clairement de la description qui en est faite ci-après, à titre indicatif et nullement limitatif, en référence aux dessins annexés, dans lesquels:
la figure 1 représente un dispositif de contrôle de l'injection de carburant,
la figure 2 représente un diagramme de l'évolution d'états physiques d'un moteur utilisant le dispositif et le procédé selon l'invention au cours d'un cycle moteur.

Comme annoncé précédemment, l'invention concerne un dispositif de contrôle d'injection de carburant 2 dans au moins une chambre de combustion 1 d'un moteur thermique.

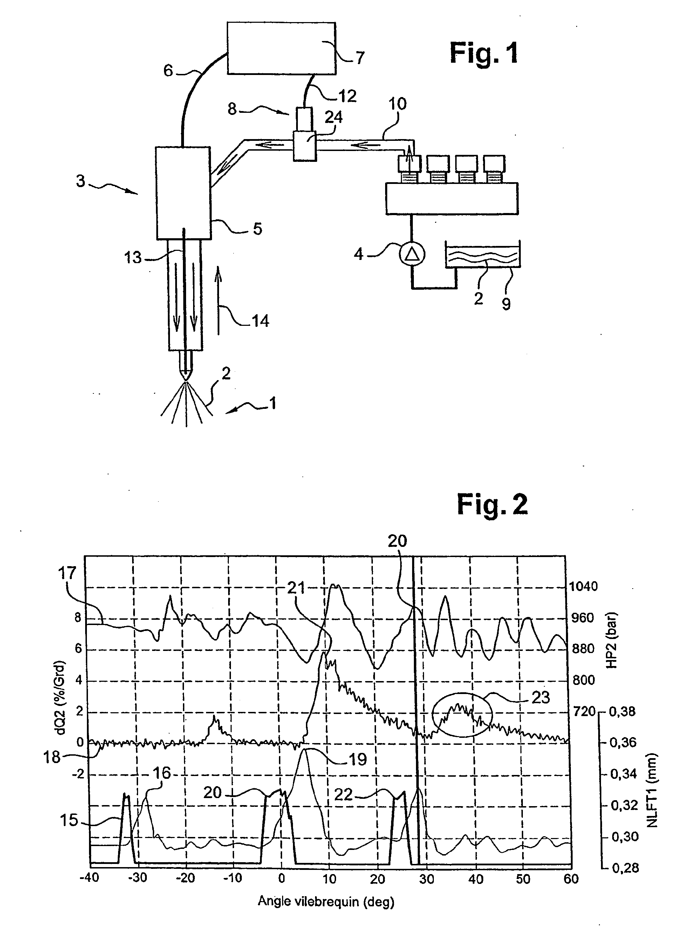

La figure 1 représente un exemple de réalisation du dispositif selon l'invention.
Un réservoir 9 de carburant 2 est relié à une pompe de carburant 4 pour alimenter en carburant sous haute pression un rail de distribution 11.
Le rail de distribution 11 est relié à un circuit haute pression 3 comprenant des tubes haute pression 10 pour alimenter en carburant haute pression au moins un injecteur 5.

L'injecteur 5 est piloté par un moyen de pilotage 7 qui émet un signal de commande 6 de l'injecteur piloté 5.

Un moyen d'évaluation de la pression 8 est disposé sur le tube haute pression 10 du circuit haute pression 3. Le moyen d'évaluation de la pression 8 de carburant 2 dans le circuit haute pression 3 est relié au moyen de pilotage 7 de l'injecteur 6.

Pour des raisons de simplification, cette figure représente un seul injecteur 5, mais il est à noter que le circuit haute pression du dispositif selon l'invention peut également comporter plusieurs injecteurs pilotés par un ou plusieurs moyens de pilotage. Ces injecteurs étant également reliés au rail de distribution 11 de carburant 2 haute pression.

De même dans le cas particulier de cette figure est uniquement représenté un seul moyen d'évaluation de la pression 8 qui est un capteur de pression 24.

Comme expliqué précédemment, ce moyen peut également être :
- soit une base de donnée cartographique fonctionnant sur un processeur et utilisant des états du moteur mesurés par des capteurs d'état,
- soit un logiciel fonctionnant sur un processeur et utilisant une stratégie de modélisation et des données provenant de capteurs d'états du moteur.

Le moyen d'évaluation de la pression qui est dans ce cas particulier un capteur de pression transmet au moyen de pilotage 7, par l'intermédiaire d'un signal d'évaluation 12 qui est généralement un signal électrique, la valeur évaluée ou mesurée de la pression de carburant dans le circuit haute pression.

Ce moyen d'évaluation de la pression peut également transmettre uniquement une information concernant le moment d'occurrence des pics 20 de pression du carburant.

Le moyen de pilotage 7 de l'injecteur 5, qui comporte un processeur alimenté par une batterie et relié à au moins une mémoire, utilise un logiciel de pilotage de l'injection.

A chaque cycle moteur, ce moyen d'injection envoie des signaux à l'injecteur 5 pour commander la levée 14 de l'aiguille d'injection 13.
A chaque levée 14 de l'aiguille d'injection, le carburant haute pression est injecté et vaporisé dans la chambre de combustion 1 du moteur.
Lorsque le volume de carburant injecté et/ou le temps de l'injection programmé par le moyen de pilotage 7 de l'injection est atteint, l'aiguille 13 est alors baissée pour obturer l'injecteur et bloquer ou réduire l'injection de carburant dans la chambre 1.

Comme expliqué précédemment une onde de pression résultant du changement de régime du carburant à l'intérieur du circuit haute pression est un phénomène excitateur qui génère des ondes de pression dans le circuit.

Ainsi en fonction des informations provenant du moyen d'évaluation de la pression de carburant dans le circuit haute pression 3, le moyen de pilotage 7 calcul l'instant d'occurrence du ou des pics hauts de pression. Une fois cet instant calculé, le moyen de pilotage 7 émet un signal de commande 6 vers l'injecteur 5, synchronisé de manière à ce que le moment de la seconde injection coïncide avec le moment d'un pic de pression 20 résultant d'une première injection 19.

Il est à noter que la première injection 19 n'est pas forcément la première injection du cycle moteur mais peut être n'importe quelle injection générant un pic de pression 20 ultérieur. De même la seconde injection peut être séparée de la première injection par plusieurs injections intermédiaires. De plus, la seconde injection peut être pilotée pour avoir lieu sur le second pic 20 de haute pression suivant la première injection, ou sur tout autre pic ultérieur ou antérieur lorsque plusieurs pics sont générés par la première injection.

La figure 2 représente un diagramme de l'évolution d'états physiques du moteur.
En abscisse, est représenté l'angle de rotation du vilebrequin, de - 40 à + 60 degrés.

Une première courbe 15 représente le signal électrique 6 de commande de l'injecteur 5 émis par le moyen de pilotage 7 en fonction de l'angle de rotation du vilebrequin.
Une seconde courbe 16 représente la levée de l'aiguille 5 en millimètre de l'injecteur, résultant du signal électrique 6 de commande, en fonction de l'angle de rotation du vilebrequin.
Une troisième courbe 17 représente la variation de la pression de carburant à l'intérieur du circuit haute pression en fonction de l'angle de rotation du vilebrequin.
Une quatrième courbe 18 représente la variation de l'énergie dégagée dans la chambre de combustion en fonction de l'angle de rotation du vilebrequin..

Le moyen de pilotage transmet un signal électrique 15 au fur et a mesure de la rotation du vilebrequin durant le cycle moteur. A chaque signal électrique 15 émis succède, légèrement décalé dans le temps, d'environ 5 degrés de rotation du vilebrequin, une montée d'aiguille maximale. L'amplitude de montée maximale de l'aiguille dépend de la durée du signal de commande électrique 5 et est limitée par la course maximale de l'aiguille dans l'injecteur. Ainsi une faible durée de signal, comprise entre un et deux degrés de rotation, conduit à une amplitude maximale de levée d'aiguille de l'ordre de 20 mm. Une plus forte durée de signal électrique 15, de l'ordre de 8 à 10 degrés de rotation vilebrequin, conduit par contre à une plus forte amplitude maximale de levée d'aiguille, de l'ordre de 30 mm.

Plus le signal électrique de commande 15 et prolongé, et plus le temps d'injection et le volume de carburant injecté seront importants.

D'un premier signal électrique 20 se situant à environ 0° de rotation vilebrequin résulte une première injection de carburant 19 dont l'amplitude maximale se situe à environ 5 degrés de rotation vilebrequin.

Dès le début de la levée de l'aiguille 13, lors de la première injection, la pression de carburant dans le circuit haute pression tombe d'environ 920 bars à environ 840 bars.

Dès le début de la baisse de l'aiguille 13, la pression du carburant augmente alors jusqu'à atteindre une pression maximale d'environ 1040 bars atteinte au moment de la fin de l'injection, c'est à dire à environ 13 degrés de rotation vilebrequin. Puis la pression du carburant dans le circuit haute pression se met alors à osciller.

Cette oscillation se traduit par une chute de la pression de sa valeur maximale de 1040 bars à une valeur minimale d'environ 820 bars atteinte à 20 degrés de rotation vilebrequin.

Le carburant 2 injecté lors de cette première injection est brûlé et dégage de l'énergie visible sur la courbe 18. Le pic maximum d'énergie de combustion 21, résultant de la première injection, se situe à environ 10 degrés de rotation.

L'oscillation de la pression autour de la pression moyenne de régulation qui est régulée à environ 920 bars dans le circuit haute pression, se poursuit par une première remontée de pression. La pression variant alors de 820 bars à 20 degrés jusqu'à atteindre un premier pic de pression 20 à environ 1000 bars à environ 30 degrés de rotation. Le moyen de pilotage 7 ayant calculé l'instant où ce premier pic 20 serait atteint avait émis un second signal 22 de commande de manière à ce que la levée maximale de l'aiguille 13 de l'injecteur 5 corresponde à l'instant de ce premier pic de pression 20.

Préférentiellement, le moment d'émission du signal de commande 6 est calculé par le moyen de pilotage 7 pour que le flux maximum de carburant injecté lors de la seconde injection soit atteint au moment du pic de pression 20 consécutif de la première injection 19.

Ainsi la seconde injection est facilitée par la montée de pression du premier pic 20.
Le carburant injecté lors de cette seconde injection provoque un second dégagement d'énergie de combustion 23 dont le dégagement maximum est situé à environ 36 degrés de rotation.

Il a été mesuré, sur un cas particulier de moteur possédant le dispositif selon l'invention, que le volume minimum de particules polluantes émises par un tel moteur (environ 4 mg / seconde) est obtenu lorsque le maximum de levée de l'aiguille 13 est disposé au moment du pic de pression carburant 20.

Il est à noter que plusieurs secondes injections peuvent être programmées au cours d'un même cycle moteur, chacune de ces secondes injections étant déclenchées lorsque la pression du carburant atteint un pic de pression d'une série de pics.
Pour cela, le moyen de pilotage est conçu pour déclencher une série de secondes injections au cours d'un même cycle moteur, chacune de ces secondes injections étant phasée pour correspondre à un pic de pression dans le circuit haute pression.

## Revendications

1. Dispositif de contrôle d'injection de carburant (2) dans au moins une chambre de combustion (1) d'un moteur thermique, le dispositif comportant un circuit haute pression (3) doté d'une pompe haute pression, d'un injecteur piloté (5), la pompe haute pression (4) alimentant en carburant (2) haute pression ledit injecteur (5), l'injecteur (5) injectant au cours d'un cycle moteur, sur commande d'un signal (6) provenant d'un moyen de pilotage (7) de l'injection, du carburant (2) dans la chambre de combustion (1) selon une première injection et au moins une seconde injection postérieure à la première, le dispositif étant **caractérisé en ce qu'**il comporte en outre un moyen d'évaluation (8) de la pression du carburant (2) dans le circuit haute pression (3), ce moyen d'évaluation (8) étant relié au moyen de pilotage (7), et **en ce que** le moyen de pilotage (7) est conçu pour déclencher la seconde injection lorsque la pression du carburant (2) évaluée par le moyen d'évaluation (8) atteint un pic consécutif à la première injection.

2. Dispositif de contrôle d'injection de carburant (2) selon la revendication 1 **caractérisé en ce que** le moyen d'évaluation (8) de la pression du carburant (2) est un capteur de pression (24).

3. Dispositif de contrôle d'injection de carburant (2) selon la revendication 1 **caractérisé en ce que** le moyen d'évaluation (8) de la pression du carburant (2) est une base de données cartographique enregistrée sur une mémoire et fonctionnant sur un processeur associé à des capteurs d'état du moteur, la pression du carburant étant évaluée par lecture d'une valeur de pression préenregistrée figurant dans la base de donnée cartographique, cette valeur correspondant à un état du moteur mesuré par les capteurs d'états.

4. Dispositif de contrôle d'injection de carburant (2) selon la revendication 3 **caractérisé en ce que** les capteurs d'états sont compris dans le groupe de capteur d'états composé de capteurs de vitesse moteur, capteurs de température du carburant injecté, capteurs de pression de la chambre de combustion, capteurs de la température de la chambre de combustion, capteurs de flux de carburant, capteurs de degrés d'ouverture, ou de temps d'ouverture de l'injecteur.

5. Dispositif de contrôle d'injection de carburant selon la revendication 1 **caractérisé en ce que** le moyen d'évaluation (8) de la pression du carburant (2) est un logiciel de calcul de pression fonctionnant sur un processeur, utilisant une stratégie de modélisation physique de phénomènes d'ondes de pression à l'intérieur du circuit haute pression, ce logiciel collectant des informations provenant de capteurs d'états du moteur et évaluant par calcul, en fonction de la stratégie de modélisation et des états moteur mesurés, la valeur de la pression du carburant (2) associée à l'état du moteur mesuré, cette valeur étant transmise au moyen de pilotage (7).

6. Dispositif de contrôle d'injection de carburant selon l'une des revendications 1 à 5 **caractérisé en ce que** le moment d'émission du signal de commande (6) est calculé par le moyen de pilotage (7) pour que le flux maximum de carburant injecté lors de la seconde injection soit atteint au moment du pic de pression (20) consécutif de la première injection (19).

7. Dispositif de contrôle d'injection de carburant selon l'une des revendications 1 à 6 **caractérisé en ce que** le moyen de pilotage (7) est conçu pour déclencher une série de secondes injections au cours d'un même cycle moteur, chacune de ces seconde injections étant phasées pour correspondre à un pic de pression (20) dans le circuit haute pression (3).

8. Procédé de contrôle d'injection de carburant (2) dans au moins une chambre de combustion (1) d'un moteur thermique, comportant une première injection de carburant dans la chambre (1) par l'intermédiaire d'un circuit de carburant haute pression (3) et au moins une seconde injection de carburant (2) postérieure à la première, ces deux injections se déroulant au cours d'un même cycle moteur, le procédé étant **caractérisé en ce qu'**il comporte en outre des étapes consistant à évaluer la pression de carburant à l'intérieur du circuit haute pression (3) et à déclencher la seconde injection lorsque la pression évaluée du carburant atteint un pic de pression (20) consécutif à la première injection.

9. Procédé de contrôle d'injection de carburant selon la revendication 8 **caractérisé en ce qu'**il comporte plusieurs secondes injections programmées au cours d'un même cycle moteur, chacune de ces secondes injections étant déclenchées lorsque la pression du carburant atteint un pic (20) de pression d'une série de pics.

## Claims

1. Device for controlling the injection of fuel (2) into at least one combustion chamber (1) of a combustion engine, the device comprising a high-pressure circuit (3) provided with a high-pressure pump, with a driven injector (5), the high-pressure pump (4) supplying fuel (2) at high pressure to the said injector (5), the injector (5) injecting, during an engine cycle, on the command of a signal (6) from an injection driving means (7), fuel (2) into the combustion chamber (1) in a first injection and at least one second injection subsequent to the first, the device being **characterized in that** it further comprises a means (8) of evaluating the pressure of the fuel (2) in the high-pressure circuit (3), this evaluating means (8) being connected to the driving means (7), and **in that** the driving means (7) is designed to initiate the second injection when the pressure of the fuel (2) as evaluated by the evaluating means (8) reaches a peak value following the first injection.

2. Device for controlling the injection of fuel (2) according to Claim 1, **characterized in that** the means (8) for evaluating the pressure of the fuel (2) is a pressure sensor (24).

3. Device for controlling the injection of fuel (2) according to Claim 1, **characterized in that** the means (8) for evaluating the pressure of the fuel (2) is a map database recorded to memory and running on a processor associated with engine state sensors, the fuel pressure being evaluated by looking up a pre-recorded pressure value contained in the map database, this value corresponding to an engine state measured by the state sensors.

4. Device for controlling the injection of fuel (2) according to Claim 3, **characterized in that** the state sensors are included in the group of state sensors made up of engine speed sensors, injected fuel temperature sensors, combustion chamber pressure sensors, combustion chamber temperature sensors, fuel flow sensors, injector openness sensors or injection period sensors.

5. Device for controlling the injection of fuel according to Claim 1, **characterized in that** the means (8) of evaluating the pressure of the fuel (2) is pressure calculating software running on a processor, using a stratagem of physically modelling pressure wave phenomena inside the high-pressure circuit, this software collecting information from engine state sensors and evaluating, by calculation, as a function of the modelling stratagem and of the measured engine states, the value of the pressure of the fuel (2) associated with the measured engine state, this value being transmitted to the driving means (7).

6. Device for controlling the injection of fuel according to one of Claims 1 to 5, **characterized in that** the moment that the command signal (6) is transmitted is calculated by the driving means (7) in such a way that the maximum flow of fuel injected during the second injection is achieved at the time of the pressure peak (20) following the first injection (19).

7. Device for controlling the injection of fuel according to one of Claims 1 to 6, **characterized in that** the driving means (7) is designed to initiate a series of second injections during one and the same engine cycle, each of these second injections being timed to correspond to a pressure peak (20) in the high-pressure circuit (3).

8. Method for controlling the injection of fuel (2) into at least one combustion chamber (1) of a combustion engine, comprising a first injection of fuel into the chamber (1) via a high-pressure fuel circuit (3) and at least one second injection of fuel (2) subsequent to the first, these two injections taking place during one and the same engine cycle, the method being **characterized in that** it further comprises steps which consist in evaluating the fuel pressure in the high-pressure circuit (3) and in initiating the second injection when the evaluated fuel pressure reaches a pressure peak (20) following the first injection.

9. Method for controlling the injection of fuel according to Claim 8, **characterized in that** it comprises several programmed second injections during one and the same engine cycle, each of these second injections being initiated when the fuel pressure reaches a pressure peak (20) of a series of peaks.

## Patentansprüche

1. Vorrichtung zur Regelung der Kraftstoffeinspritzung (2) in mindestens einen Brennraum (1) eines Wärmekraftmotors, wobei die Vorrichtung einen Hochdruckkreis (3) aufweist, der mit einer Hochdruckpumpe und einer gesteuerten Einspritzdüse (5) versehen ist, wobei die Hochdruckpumpe (4) die Einspritzdüse (5) mit Hochdruckkraftstoff (2) speist, wobei die Einspritzdüse (5) während eines Motorzyklus auf Steuerung durch ein Signal (6), das von einer Steuereinrichtung (7) der Einspritzung kommt, Kraftstoff (2) in den Brennraum (1) gemäß einer ersten Einspritzung und mindestens einer zweiten Einspritzung nach der ersten einspritzt, wobei die Vorrichtung **dadurch gekennzeichnet ist, dass** sie außerdem eine Auswertungseinrichtung (8) des Drucks des Kraftstoffs (2) im Hochdruckkreis (3) aufweist, wobei diese Auswertungseinrichtung (8) mit der Steuereinrichtung (7) verbunden ist, und dass die Steuereinrichtung (7) konzipiert ist, um die zweite Einspritzung auszulösen, wenn der von der Auswertungseinrichtung (8) ausgewertete Druck des Kraftstoffs (2) nach der ersten Einspritzung eine Spitze erreicht.

2. Vorrichtung zur Regelung der Kraftstoffeinspritzung (2) nach Anspruch 1, **dadurch gekennzeichnet, dass** die Auswertungseinrichtung (8) des Drucks des Kraftstoffs (2) ein Drucksensor (24) ist.

3. Vorrichtung zur Regelung der Kraftstoffeinspritzung (2) nach Anspruch 1, **dadurch gekennzeichnet, dass** die Auswertungseinrichtung (8) des Drucks des Kraftstoffs (2) eine kartographische Datenbank ist, die in einem Speicher eingespeichert ist und in einem Prozessor arbeitet, der Zustandssensoren des Motors zugeordnet ist, wobei der Druck des Kraftstoffs durch Ablesen eines vorab eingespeicherten Druckwerts ausgewertet wird, der sich in der kartographischen Datenbank befindet, wobei dieser Wert einem Zustand des Motors entspricht, der von den Zustandssensoren gemessen wird.

4. Vorrichtung zur Regelung der Kraftstoffeinspritzung (2) nach Anspruch 3, **dadurch gekennzeichnet, dass** die Zustandssensoren in der Gruppe von Zustandssensoren enthalten sind, die aus den Motorgeschwindigkeitssensoren, Temperatursensoren des eingespritzten Kraftstoffs, Drucksensoren des Brennraums, Temperatursensoren des Brennraums, Kraftstofffluss-Sensoren, Öffnungsgrad-Sensoren, oder Öffnungszeitsensoren der Einspritzdüse besteht.

5. Vorrichtung zur Regelung der Kraftstoffeinspritzung nach Anspruch 1, **dadurch gekennzeichnet, dass** die Auswertungseinrichtung (8) des Drucks des Kraftstoffs (2) eine in einem Prozessor arbeitende Druckberechnungs-Software ist, die eine Strategie der physikalischen Modellisierung von Druckwellenphänomenen innerhalb des Hochdruckkreises verwendet, wobei diese Software Informationen sammelt, die von Zustandssensoren des Motors stammen, und durch Berechnung in Abhängigkeit von der Modellisierungsstrategie und von den gemessenen Motorzuständen den Wert des Drucks des Kraftstoffs (2) auswertet, der dem gemessenen Zustand des Motors zugeordnet ist, wobei dieser Wert an die Steuereinrichtung (7) übertragen wird.

6. Vorrichtung zur Regelung der Kraftstoffeinspritzung nach einem der Ansprüche 1 bis 5, **dadurch gekennzeichnet, dass** der Sendezeitpunkt des Steuersignals (6) von der Steuereinrichtung (7) so berechnet wird, dass der während der zweiten Einspritzung eingespritzte maximale Kraftstofffluss in dem Zeitpunkt der Druckspitze (20) erreicht wird, die auf die erste Einspritzung (19) folgt.

7. Vorrichtung zur Regelung der Kraftstoffeinspritzung nach einem der Ansprüche 1 bis 6, **dadurch gekennzeichnet, dass** die Steuereinrichtung (7) konzipiert ist, um eine Reihe von zweiten Einspritzungen während des gleichen Motorzyklus auszulösen, wobei jede dieser zweiten Einspritzungen so phasengesteuert ist, dass sie einer Druckspitze (20) in dem Hochdruckkreis (3) entspricht.

8. Verfahren zur Regelung der Kraftstoffeinspritzung (2) in mindestens einen Brennraum (1) eines Wärmekraftmotors, mit einer ersten Kraftstoffeinspritzung in den Raum (1) über einen Hochdruckkraftstoffkreis (3) und mit mindestens einer zweiten Einspritzung von Kraftstoff (2) nach der ersten, wobei diese zwei Einspritzungen während des gleichen Motorzyklus ablaufen, wobei das Verfahren **dadurch gekennzeichnet ist, dass** es außerdem Schritte aufweist, die darin bestehen, den Kraftstoffdruck innerhalb des Hochdruckkreises (3) auszuwerten und die zweite Einspritzung auszulösen, wenn der ausgewertete Druck des Kraftstoffs eine Druckspitze (20) nach der ersten Einspritzung erreicht.

9. Verfahren zur Regelung der Kraftstoffeinspritzung nach Anspruch 8, **dadurch gekennzeichnet, dass** es mehrere zweite Einspritzungen aufweist, die während des gleichen Motorzyklus programmiert sind, wobei jede dieser zweiten Einspritzungen ausgelöst wird, wenn der Druck des Kraftstoffs eine Druckspitze (20) einer Reihe von Spitzen erreicht.
